# EUROPEAN PATENT APPLICATION

(11) **EP 4 678 000 A1**
(43) Date of publication of application: **14.01.2026**
(21) Application number: 25189007.5
(22) Date of filing: 11.07.2025
(51) Int. Cl.: A01K 47/00, A01K 49/00, A01K 55/00, A61D 1/00

(54) **DEVICE FOR LARVAL TRANSFER OPERATIONS**

(30) Priority: 12.07.2024 IT 202400016168
(71) Applicant: Pippia, Cristina, 06025 Nocera Umbra (PG) (IT); Pippia, Gian Mario, 06025 Nocera Umbra (PG) (IT)
(72) Inventor: Pippia, Cristina, 06025 Nocera Umbra (PG) (IT); Pippia, Gian Mario, 06025 Nocera Umbra (PG) (IT)
(74) Representative: Mulas, Chiara

(57) **Abstract**

A larva-picker device (10) for removing a honey bee larva from a respective cell, comprising a hollow shaped needle (41) having a first end portion (41'), a second end portion (413) and a channel (40), and a suction portion (11), in fluid connection with said first end portion (41') of said shaped needle (41), said larva-picker device (10) being configured in such a way that, upon creating a negative pressure within said channel (40) by suction through said suction portion (11) and by arranging said first end portion (41') adjacent to a larva contained in a cell, said larva adheres to said first end portion (41') enabling the larval grafting of said larva.

## Description

The present invention relates to a larva-picker device that facilitates the larval grafting operations.

In particular, the device according to the invention enables an increase in production of queen bees with improved morphological characteristics and an increase in royal jelly production of a beekeeping enterprise.

In a beehive, honey bees are divided into three castes: workers, drones, and queens, worker bees and queens develop from fertilised eggs, while drones develop from unfertilised eggs. The eggs are laid by the queen inside cells of different sizes and shapes, depending on the future caste are destined to belong to.

Worker bee cells are hexagonal in shape, as are those of the drones, although the latter are larger, while the cells where the queen bees develop are round in shape.

These queen bee cells are positioned vertically with the cell entrance facing downwards, while those intended for the development of workers and drones are arranged at an angle of approximately 20° with respect to the horizontal axis of the ground, with the opening facing upwards.

Eggs laid inside the cells hatch approximately twenty-four hours after being laid and are all fed with royal jelly by nurse bees during the first three days, nurse bees, in particular, are worker bees in the early stage of their development, that is, within the first fifteen days of their life as bees. Subsequently, worker bees and drones are fed with honey and pollen, unlike queen bees, which are fed exclusively with royal jelly.

This different type of feeding causes the queen bee larva to grow more significantly, to develop the female reproductive system apparatus with procreative capacity, and to become longer-lived.

The device according to the invention falls within the category of tools used in larval grafting operations. Such operations consist in transferring worker bee larvae from their cells into artificial cells called cell cups, which are larger in size and similar in shape to the cells intended for queen bees. The cell cup is arranged vertically with its opening facing downwards, just as cells intended to host queen bee larvae are arranged in nature.

This operation serves two productive purposes:
- Production of queen bees; and
- Production of royal jelly.

In both cases, the larva is fed by nurse bees, which deposit royal jelly into the cell cup, while simultaneously depositing wax around its rim, forming an increasingly deeper cell, thus increasing the space available to the larva as it grows.

In the first case, a period of eight days is awaited, after which the cell is closed, technically speaking it is operculated by the honey bees using their wax and over the following eight days the larva will transition into the pupal stage. Once these final eight days have passed, the queen bee will be mature, will therefore remove the operculum of the cell and will finally emerge.

In the second case, instead, the standard eight-day period for closing the cell is not observed, but just seventy-two hours are observed, after which the larva is removed and all the royal jelly deposited up to that point by the nurse bees is collected.

The royal jelly is then packaged in small glass bottles of approximately 10 grams or, alternatively, the packaging may consist of the same cell created by the honey bees on the original cell cup. In this latter case, the cell is closed by the operator, by pressing the soft wax located at the top of the cell.

The production of royal jelly represents an important source of supplementary income for beekeeping enterprises, and it currently is a very limited form of production due to the challenges posed by the larval grafting operations.

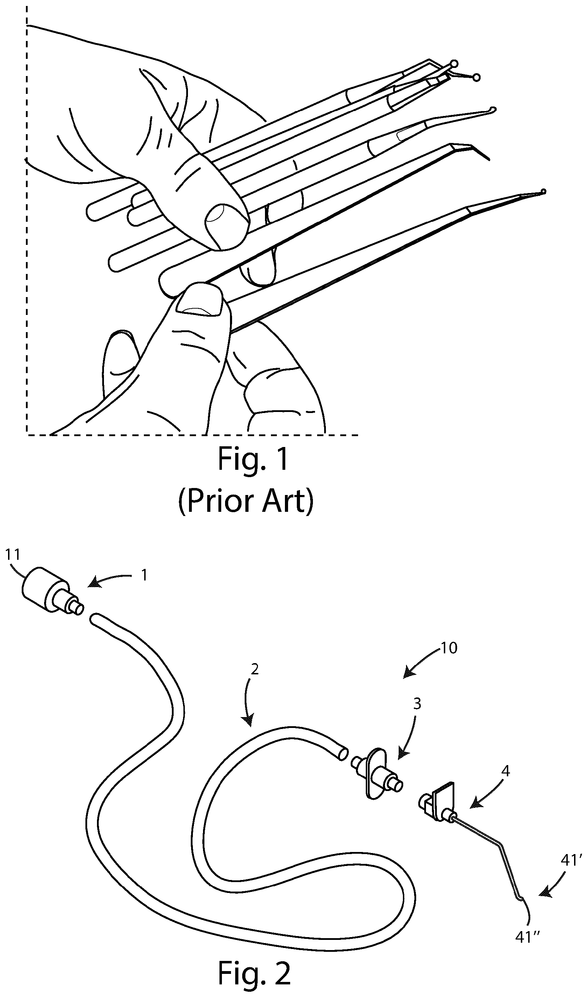

Currently, the larval grafting operations are performed manually by highly specialised operators using specific tools, mainly of two types: "larva-pickers" and "Picking" devices. As can be seen in Figure 1, these prior art tools have a particular elongated shape with a suitably shaped tip that can be inserted beneath the larva, which rests on the surface of a bath of royal jelly.

The execution of these operations using the aforementioned prior art tools presents certain difficulties that slow down the larval grafting operations or even compromise their success.

These difficulties are essentially two: properly inserting the tip of the larva-picker tool beneath the larva to perform the removal and subsequently to release the larva inside the cell cup.

The insertion of the larva-picker tool beneath the larva becomes increasingly difficult as the amount of royal jelly in the cell decreases, since the larva, having a C-shaped form, adheres to the tip of the larva-picker tool only if both the larva and the larva-picker tool are properly positioned relative to one another, making this operation challenging for an inexperienced beekeeper and time-consuming to perform.

Releasing the larva into the cell cup is also a challenging operation, as releasing the larva, once it has been picked, requires particularly delicate movements that only highly experienced operators are able to perform without causing damage to the larva.

The prolonged duration caused by the aforementioned difficulties may compromise the success of the larval grafting operations, as the larva, when kept outside the cell for too long, may become dehydrated and die.

Patent document No. CN 118 202 964 A describes a prior art larva-grafting device comprising a shaped needle traversed by a suction channel, through which a larva can be moved by the suction force exerted within the suction channel. However, this prior art solution allows the larvae to be sucked from within their cells only from above, posing a risk of crushing the larva. Furthermore, when the larva has just hatched and does not exhibit the characteristic "C"-shaped form, since in the early days it is fed with colostrum, rather than royal jelly, it is not possible to retrieve it using the prior art device.

Prior art patent documents CN 216 495 298 U, CN 110024 717 A describe suction devices for liquids or insects, but do not describe devices for larval grafting operations.

Patent document KR 102 004 640 B1 concerns the technical field of larval grafting operations.

The aim of the present invention is to overcome the aforementioned prior art problems, in particular, the invention aims to make the larval grafting operation easier and therefore faster and less expensive.

In particular, the aim of the present invention is to enable the retrieval of as many larvae as possible, regardless of their size and shape, while avoiding damage to them.

It is an object of present invention a larva-picker device for removing a honey bee larva from a respective cell, comprising a hollow shaped needle having a first end portion, a second end portion and a channel, and a suction portion, in fluid connection with said first end portion of said shaped needle, said larva-picker device being configured such that, upon creating a negative pressure within said channel by suction through said suction portion, and by arranging said first end portion adjacent to a larva contained in a cell, said larva adheres to said first end portion enabling the larval grafting of said larva.

Also, according to the invention, said larva-picker device may further comprise a flexible tube comprising a first end and a second end and being in fluid connection with said shaped needle at said second end, and wherein said suction portion may be in fluid connection with said first end of said tube.

Moreover, according to the invention, the inner diameter of said tube may be between 3 mm and 5 mm, and the inner diameter of the first end portion of said shaped needle may be between 0.3 mm and 0.4 mm.

In addition, according to the invention, said larva-picker device may further comprise a mouthpiece, said mouthpiece comprising a coupling portion, interlockingly coupled to said first end of said tube, and said suction portion, wherein said mouthpiece may be adapted to receive the mouth of a user. Furthermore, according to the invention, said shaped needle may comprise a first linear portion and a second linear portion, continuous with one another, which define a first angle between 100° and 150°, preferably 125°, and wherein said first end portion of said shaped needle may be arranged at the free end of said second linear portion.

Moreover, according to the invention, said first linear portion may have a characteristic length, measured with respect to its central axis, between 25 - 40 mm and said second linear portion may have a characteristic length, measured with respect to its central axis, between 14 - 24 mm.

In addition, according to the invention, said first end portion of said shaped needle may have an extension inclined with respect to the central axis of said first end portion by a second angle between 100° and 150°, preferably equal to 125°.

Furthermore, according to the invention, said extension may have a characteristic length, measured with respect to its central axis, between 1 - 2 mm.

Moreover, according to the invention, said larva-picker device may further comprise a needle-holder body having a through hole, the second end of said shaped needle may be coupled to the first opening of said through hole. Furthermore, according to the invention, said larva-picker device may further comprise a connecting element adapted to fluidically connect said tube to said needle-holder body, wherein said connecting element may have a hollow cylindrical linear body extending along a central axis, symmetric with respect to a transverse plane, coupled at a first opening to said tube and at a second opening to said needle-holder body.

Furthermore, it is an object of the present invention a kit for assembling a larva-picker device comprising:
- a shaped needle;
- a needle-holder body adapted to couple with said shaped needle;
- a connecting element adapted to be coupled to said needle-holder body;
- a tube adapted to be coupled to said connecting element;
- a mouthpiece adapted to be coupled to said tube.

In addition, it is an object of the present invention a method for the larval grafting of a honey bee larva from a cell using a larva-picker device, characterised in that it comprises the following steps:
a) inserting said end portion of said shaped needle into a cell until said end portion comes into contact with said larva;
b) creating a negative pressure within said channel of said shaped needle by suction through a suction portion of said larva-picker device, so that said larva adheres to said end portion;
c) lifting said larva from the bottom of the cell by means of said larva-picker device;
d) maintaining said negative pressure within said larva-picker device by occluding said suction portion;
e) interrupting step d) to detach said larva from said end portion.
   Finally, according to the invention, said method for the larval grafting of a honey bee larva may, between steps d) and e), provide the following steps:
f) transferring said larva into a cell cup, by positioning said end portion within said cell cup;
g) bringing said larva into contact with a bottom wall of said cell cup.
   The invention will now be described by way of illustration but without limitation, with particular reference to the accompanying drawings, wherein:
   Figure 1 shows a perspective view of the larva-picker devices according to the prior art;
   Figure 2 shows a perspective view of an exploded view of the larva-picker device according to the invention;
   Figure 3 shows a side view of the exploded view of Figure 2;
   Figure 4 shows a sectional side view of the assembled larva-picker device of Figure 2;
   Figure 5 shows a sectional side view of the mouthpiece of the larva-picker device of Figure 2;
   Figure 6 shows a sectional side view of the tube of the larva-picker device of Figure 2;
   Figure 7 shows a sectional side view of the connecting element of the larva-picker device of Figure 2;
   Figure 8 shows a front view of the connecting element of Figure 7;
   Figure 9 shows a sectional side view of the shaped needle of the larva-picker device of Figure 2;
   Figure 10 shows a rear view of the shaped needle of Figure 9;
   Figure 11 shows a sectional side view of a detail XI of the shaped needle of Figure 9;
   Figure 12 shows a perspective view of the shaped needle of Figure 9;
   Figure 13 shows the insertion of the shaped needle of the device of Figure 2 into the honey bee larval cells;
   Figure 14 shows the removal of the shaped needle of the device of Figure 2 from within the honey bee larval cells; and
   Figure 15 shows the insertion of a larva retrieved from a cell into a cell cup. With reference to Figures 2 and 3, it is possible to see the main elements of the larva-picker device, in particular a suction-based larva-picker device, which will be designated by reference number 10. Larva-picker device 10 comprises: a mouthpiece 1, a tube 2, a connecting element 3, and a shaped needle 4.

Specifically, these elements 1, 2, 3, 4 are coupled to one another in the following order:
- mouthpiece 1 and tube 2;
- tube 2 and connecting element 3; and
- connecting element 3 and shaped needle 4,
wherein a suction portion 11 of mouthpiece 1 and an end 41' of shaped needle 4 are the free ends of larva-picker device 10, respectively adapted to receive the mouth of an operator and to gently touch the larva to be placed in the cell cup.

The connections between elements 1, 2, 3, 4 of larva-picker device 10 are reversibly made by interlocking, by dimensioning for interference the characteristic parameters (in particular the diameter of the end sections) of each coupling end of elements 1, 2, 3, 4 involved in the aforementioned couplings.

Compared to prior art larva-picker devices, larva-picker device 10 according to the invention operates based on a different operating principle, which consists in retrieving the larva by suction performed by an operator through tube 2 or, preferably, through mouthpiece 1 coupled to one end of tube 2 and then through components 3 and 4, in particular by engaging the larva to end 41' of shaped needle 4.

The larval grafting operation will be performed by an operator through the suction process via tube 2, combined with the positioning of end 41' of shaped needle 4 to gently touch the larva, which is sucked by the action of the mouth placed against the free end of tube 2. Preferably, the operator's mouth will be placed against suction portion 11 of mouthpiece 1, rather than being placed directly against the free end of tube 2.

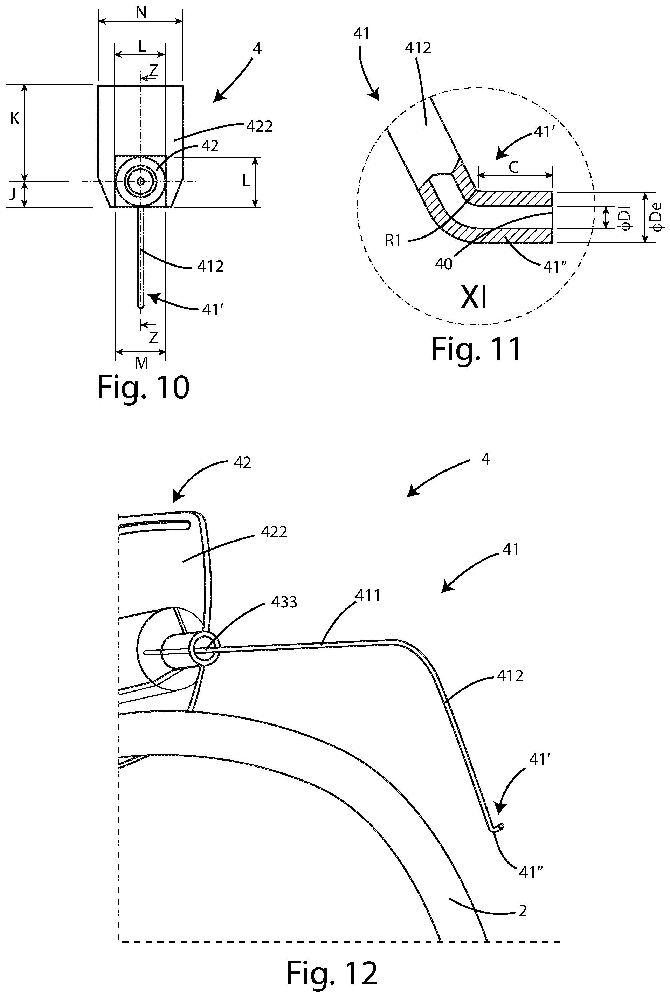

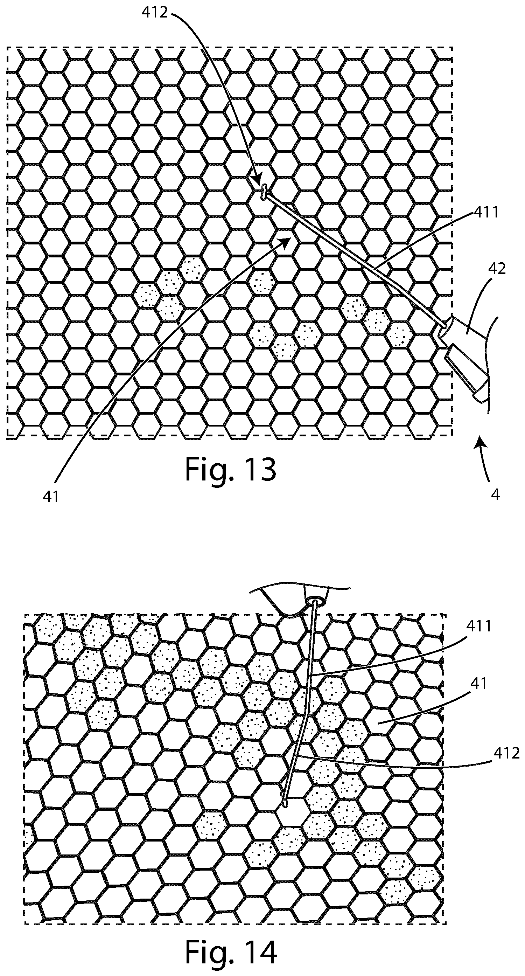

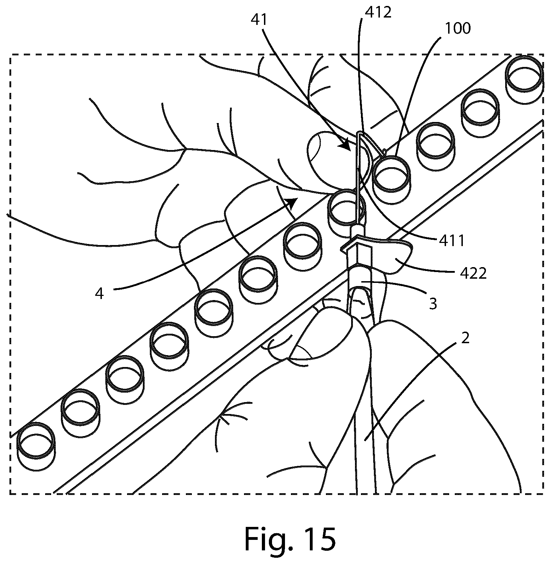

With reference to Figures 12 - 15, the retrieval of the larva from its cell is performed through the following steps, preferably in succession:
a) inserting end 41' of shaped needle 4 into the cell until gently contacting the larva (Figure 13),
   when end 41' of needle 4 is in contact with the larva, regardless of the larva's position, and whether royal jelly is present or not
b) exerting a gentle suction with the mouth placed against suction portion 11 through mouthpiece 1 or against the free end of tube 2, so as to create a negative pressure so that the larva adheres gently to end 41' of shaped needle 4, in order not to damage the larva itself;
c) lifting the larva from the bottom of the cell (Figure 14);
d) interrupting suction by the operator; in particular, the larva will still adhere to end 41' of shaped needle 4 until suction portion 11 of mouthpiece 1 is occluded, in particular by the operator's mouth;
e) transferring the larva into a cell cup 100, by inserting end portion 41' of shaped needle 4 into cell cup 100 (Figure 15); and
f) placing the larva in contact with the bottom wall of cell cup 100, thus detaching the larva from end portion 41' of shaped needle 4.

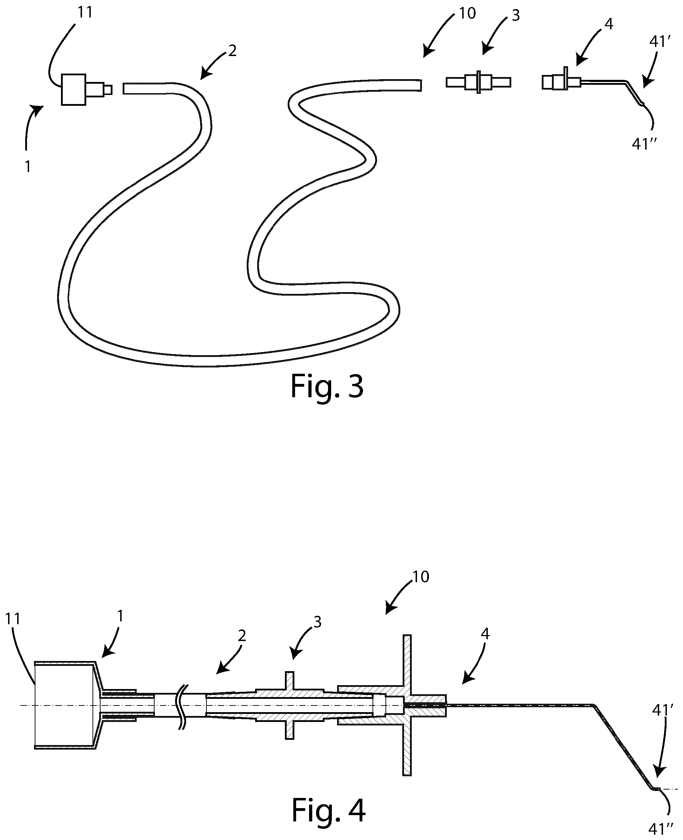

With reference to Figures 4 - 11, elements 1, 2, 3, 4 of larva-picker device 10 according to the invention will be described in more detail below.

In Figure 4 it can be seen assembled larva-picker device 10, wherein elements 1, 2, 3, 4, which compose it, are coupled to one another and wherein it is possible to see how individual elements 1, 2, 3, 4 are joined, in particular interlockingly coupled, to one another through interference fits of their respective end portions, each end portion preferably having a hollow circular cross-section.

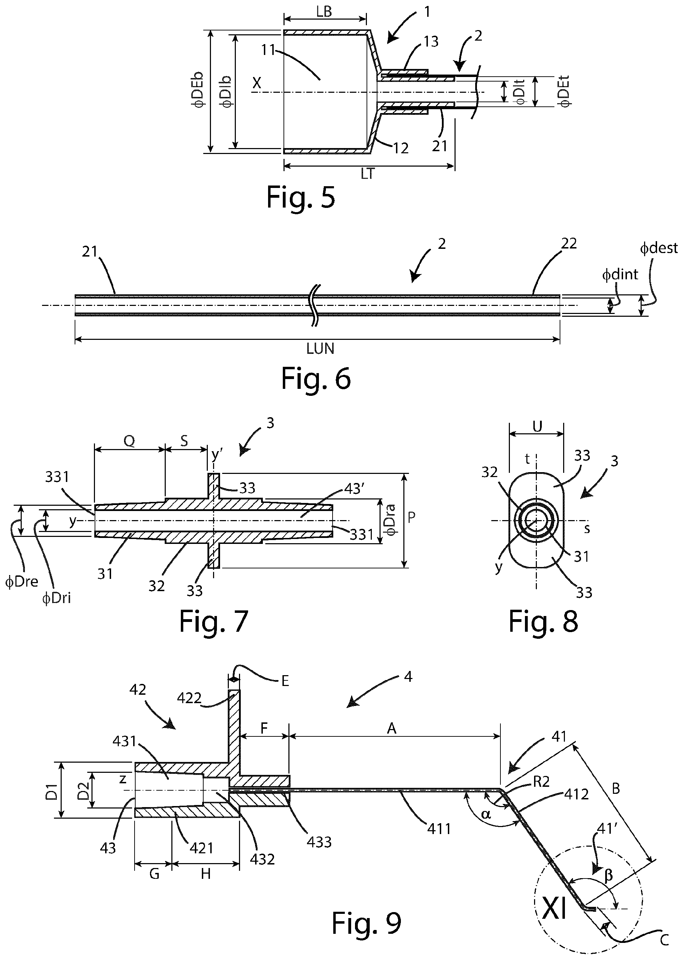

Figure 5 shows a side view of mouthpiece 1 in section along its plane of symmetry, wherein it is possible to see how it consists of a suction portion 11 having a hollow cylindrical shape, with an inner diameter DIb between 10 and 18 mm and an outer diameter DEb between 12 and 20 mm (thus having a thickness of 1 mm) and a length LB, measured along a central x-axis of mouthpiece 1 itself, between 10 and 20 mm. Said suction portion 11 is continuous with a funnel-shaped portion 12, which allows for optimal air channelling during the suction phase.

Mouthpiece 1 further extends along said central x-axis with a coupling portion 13 that is continuous with said funnel-shaped portion 12, the latter also having a hollow cylindrical profile with an inner diameter DIt between 3 and 5.2 mm and an outer diameter DEt between 3.8 and 6 mm, adapted to receive a first end 21 of the tube 2 and interlockingly coupling with said first end 21, preferably said mouthpiece 1 is made of plastic material, in order to be more compatible with the operator's lips. Overall, mouthpiece 1 has a total length LT, still measured along said x-axis, between 18 and 30 mm. With reference to Figure 6, it is possible to see hollow cylindrical tube 2 of larva-picker device 10, which may have a length LUN ranging from 700 to 1200 mm depending on use and operator preferences, and it also has an inner diameter dint between 3 and 5 mm and an outer diameter dest between 3.8 and 5.8 mm, preferably, said tube 2 is made of rubber as it must be flexible, the presence and flexibility of the tube allow shaped needle 4 to be freely oriented, enabling the operator to maintain the optimal working position. Said tube 2 has two coupling ends 21, 22, wherein a first end 21, as indicated above, is adapted to couple with said coupling portion 13 of mouthpiece 1, while a second end 22 is adapted to couple with a portion of connecting element 3.

In Figures 7 and 8 it is possible to see connecting element 3 of larva-picker device 10, which is adapted to couple at its ends respectively with tube 2, at said second end 22, and with shaped needle 4.

Said connecting element 3 has a substantially hollow cylindrical shape that extends linearly along its central y-axis and has an overall length, measured along said central y-axis, between 27.2 and 34 mm. Furthermore, connecting element 3 has a transverse symmetry plane y' perpendicular to said central y-axis, defined by two perpendicular horizontal axes, i.e. horizontal axis s and vertical axis t, and which divides connecting element 3 itself in half, said connecting element 3 having a height P, measured along a perpendicular vertical axis t, between 11 and 13 mm and a width U, measured along a perpendicular horizontal axis s, between 6 - 8 mm.

A first engaging portion 31, adapted to be inserted into second end 22 of tube 2, has a truncated conical shape with an outer surface angle between 90° and 94°, preferably 92°, with respect to said transverse plane y' and an outer diameter Dre and an inner diameter Dri, at the end opening, between 3.8 - 4.2 mm and 2.6 - 3 mm, respectively. This first engaging portion 31 also has a length Q, measured along said central y-axis, between 8 - 10 mm.

This outer surface angle of first engaging portion 31 allows second end 22 of tube 2 to deform and thus seal the interference fit with said first portion 31 of connecting element 3, without the aid of external elements.

Between said first portion 31 and said transverse plane y', a second portion 32 of connecting element 3 is formed, having a hollow cylindrical shape, in order to facilitate gripping of connecting element 3 itself by the operator using larva-picker device 10 according to the invention.

Said second portion 32 preferably has the same inner diameter Dri as first coupling portion 31, an outer diameter Dra between 5.2 -6 mm, and a length S, measured along said central y-axis, between 5 - 6 mm.

Adjacent to said second portion 32 and parallel to said transverse plane y', preferably lying thereon, at least one gripping element 33 is obtained. Said gripping element 33, as shown in Figures 2, 3, 5, and 8, consists of at least one fin 33, and preferably there is an additional fin 33 positioned symmetrically opposite said at least one fin 33 with respect to said central y-axis of connecting element 3.

Said gripping element 33 has a height P, measured along said vertical perpendicular axis t, between 11 - 13 mm, and a width U, measured along said horizontal perpendicular axis s, between 6 - 8 mm.

In other embodiments not shown, said at least one gripping element 33 may be obtained by an outer rim, circular or of other shapes, such as rectangular, square, or elliptical, surrounding the outer surface of the connecting element 3, preferably at a transverse plane y' perpendicular to the central y-axis of connecting element 3.

Finally, with reference to Figures 9 - 11, it is possible to see the shaped needle 4, which has two separate bodies 41, 42, preferably made of rigid material, respectively, a hollow needle 41 and a needle-holder body 42 interlockingly coupled to one another. Said shaped needle 4 comprises said end 41' of hollow needle 41, which gently touches the larva to be positioned into the cell cup C, and a coupling end 421 of needle-holder body 42 adapted to couple with said first portion 33 of connecting element 3 facing said shaped needle 4. Said needle-holder body 42 has an overall length, measured along its central z-axis, between 17.8 - 22 mm, a height L, measured along an axis perpendicular to said central z-axis, between 6 - 8 mm and a width M, measured along an axis perpendicular to these last two axes, between 6 - 7.6 mm.

Said coupling portion 421 has a through hole 43 adapted to receive at its respective ends said end portion 33 of connecting element 3 and a joining portion 411 of hollow needle 41, tapering concentrically with respect to said central z-axis of needle-holder body 42, from the end facing tube 2 to the end facing hollow needle 41.

A first portion of hole 43 has a hollow truncated-conical section 431 with a lateral surface inclined at an angle between 90° and 94°, preferably coinciding with the inclination angle of first portion 33 of connecting element 3, therefore preferably 92°, to facilitate its coupling with needle-holder body 42. Said hollow truncated-conical portion 431 has an outer diameter D1 and an inner diameter D2, at the opening of through hole 43, respectively between 6 - 7 mm and 4 - 4.6 mm.

Through hole 43 further comprises a first central cylindrical portion 432 and a cylindrical end section 433 having a length, measured along said central z-axis, between 7.2 - 8.5 mm, with a smaller diameter than previous portions 431, 432, adapted to receive one end 433 of joining portion 411, in particular a second end 413 of hollow needle 41, and to couple with it by interlocking, having the respective diameters substantially coincident. Finally, needle-holder body 42 has a projecting wall 422, perpendicular to the central z-axis, between the end portions of needle-holder body 42 and having a length E, measured along said central z-axis, between 1.2 - 1.5 mm, a height J+K, measured along said axis perpendicular to said central z-axis, between 15 - 18 mm and a width N, measured along an axis perpendicular to these last two axes, between 10 and 13 mm. This projecting wall 422 facilitates gripping of shaped needle 4 and therefore allows the needle to be oriented in the most appropriate way during the larval grafting operation.

Hollow needle 41 of shaped needle 4, with reference to Figure 9, comprises two linear portions 411, 412, obtained from the same element and continuous with respect to one another and having respective characteristic lengths A and B, measured along their respective central axis, between 25 - 40 mm and 14 - 24 mm, respectively. Said linear portions 411, 412 consist of a joining portion 411, oriented along said central z-axis and adapted to couple within end portion 433 of through hole 43 of needle-holder body 42, and a terminal portion 412 inclined, by means of a connecting radius R2 between two portions 411, 412 which is between 1 - 2 mm, with respect to said joining portion 411 by a first angle α between 100° and 150°, preferably 125°, obtained between the two central axes of portions 411, 412.

In this configuration of hollow needle 41, said end portion 41' is provided, which is obtained at the free end of terminal portion 412 and will come into contact with the larva to be moved, once hollow needle 41 is inserted into the cell. The larva will remain adhered to the end of the needle due to the negative pressure generated by the suction applied by the operator.

The inclination between two portions 411 and 412 advantageously allows end portion 41' to be properly and easily positioned within the cell, without risking damage to the larva itself.

With reference to Figure 11, end portion 41' of hollow needle 41 can be seen. This end portion 41' may optionally have a further extension 41" inclined with respect to the direction of development of terminal portion 412 of hollow needle 41, in particular with respect to its central axis. Said extension 41" is preferably inclined with respect to terminal portion 412 in such a way as to be parallel to said joining portion 411, in other words, the central axis of extension 42" is parallel to the central z-axis of joining portion 411. Said extension 41" has a connecting radius R1 between 0.2 - 2.0 mm, preferably 0.55. Again, preferably, the central axis of said extension forms an angle β with the central axis of said terminal portion 412 which is between 100° and 150°, preferably 125°.

Furthermore, said extension 41" preferably has the same section as needle 41 along both linear portions 411, 412, with an inner diameter Di and an outer diameter De respectively between 0.3 - 0.4 mm and 0.55 - 0.7 mm. Preferably, the characteristic length C of said extension 41" is between 1 - 2 mm.

Said extension 41" facilitates larval grafting operations by allowing lateral access to the larva, without the need to retrieve it from below, as in the prior art devices shown in Figure 1.

This also makes it possible to collect smaller larvae, which have not yet received royal jelly from the worker bees.

Advantageously, the invention makes it possible to overcome the aforementioned problems of the prior art, in particular the difficulties encountered in retrieving larvae in the presence of a low level of royal jelly, since thanks to larva-picker device 10 according to the invention, it is not necessary to insert end portion 41' underneath the larva and therefore removing even small (very young) larvae is not a problem.

With reference to larva release operations, however, they are greatly facilitated and accelerated thanks to larva-picker device 10 according to the invention, which makes it possible to reduce the time required for larval grafting operations, ensuring fewer larval losses and therefore allowing the process to become more cost-effective, reducing labour costs as it simplifies the beekeeper's work.

The execution speed of the operation, compared to traditional manual tools, is indeed increased to the benefit of the successful larval grafting operation. Furthermore, due to the simplicity of larva-picker device 10 according to the invention, the larval grafting operations can be performed easily and successfully even by non-professional beekeepers and/or unskilled operators.

At the same time, advantageously, the amount of royal jelly that can be produced using larva-picker device 10 according to the invention is increased, as larval grafting operations can be carried out even with smaller and younger larvae, which leads nurse bees to feed them with royal jelly of higher quality and in greater quantity.

If the aim of larval grafting is to produce queen bees, rather than royal jelly, for the same reason mentioned above, the resulting queen bees will be larger and more robust. The increased size of the queen bees leads to greater egg production, resulting in larger honey bee colonies and enhanced production of honey, propolis, and pollen. Furthermore, larger queen bees reduce the incidence of underdevelopment and produce better offspring than known standards.

In terms of numbers, the state of the art yields an average of approximately 350 mg per cell of royal jelly; while by using larva-picker device 10 according to the invention, average yields of 400 mg per cell can be achieved, with peaks reaching up to 450 mg per cell.

In the foregoing, the preferred embodiments of the present invention have been described, and variants have been suggested, but it is to be understood that those skilled in the art may introduce modifications and changes without departing from the scope of protection, as defined by the appended claims.

## Claims

1. A larva-picker device (10) for removing a honey bee larva from a respective cell, comprising
a hollow shaped needle (41) having a first end portion (41'), a second end portion (413) and a channel (40), and
a suction portion (11), in fluid connection with said first end portion (41') of said shaped needle (41),
said larva-picker device (10) being configured such that, upon creating a negative pressure within said channel (40) by suction through said suction portion (11) and by arranging said first end portion (41') adjacent to a larva contained in a cell, said larva adheres to said first end portion (41'), enabling the larval grafting of said larva.

2. The larva-picker device (10) according to the preceding claim,
wherein said larva-picker device (10) further comprises a flexible tube (2) comprising a first end (21) and a second end (22) and being in fluid connection with said shaped needle (41) at said second end (22), and
wherein said suction portion (11) is in fluid connection with said first end (21) of said tube (2).

3. The larva-picker device (10) according to the preceding claim, wherein
the inner diameter (dᵢₙₜ) of said tube (2) is between 3 mm and 5 mm and
the inner diameter (Dᵢ) of the first end portion (41') of said shaped needle (41) is between 0.3 mm and 0.4 mm.

4. The larva-picker device (10) according to claim 2 or 3, wherein said larva-picker device (10) further comprises a mouthpiece (1),
said mouthpiece (1) comprising
a coupling portion (13), interlockingly coupled to said first end (21) of said tube (2), and
said suction portion (11), wherein said mouthpiece (1) is adapted to receive the mouth of a user.

5. The larva-picker device (10) according to any of the preceding claims,
wherein said shaped needle (41) comprises a first linear portion (411) and a second linear portion (412), continuous with one another, which define a first angle (α) between 100° and 150°, preferably 125°, and
wherein said first end portion (41') of said shaped needle (41) is arranged at the free end of said second linear portion (412).

6. The larva-picker device (10) according to the preceding claim, wherein said first linear portion (411) has a characteristic length (A), measured with respect to its central axis, between 25 - 40 mm and said second linear portion (412) has a characteristic length (B), measured with respect to its central axis, between 14 - 24 mm.

7. The larva-picker device (10) according to claim 5 or 6, wherein said first end portion (41') of said shaped needle (41) has an extension (41") inclined with respect to the central axis of said second linear portion (412) by a second angle (β) between 100° and 150°, preferably equal to 125°.

8. The larva-picker device (10) according to the preceding claim, wherein said extension (41") has a characteristic length (C), measured with respect to its central axis, between 1 - 2 mm.

9. The larva-picker device (10) according to any of the preceding claims, wherein said larva-picker device (10) further comprises a needle-holder body (42) having a through hole (43), the second end (413) of said shaped needle (41) being coupled to the first opening (433) of said through hole (43).

10. The larva-picker device (10) according to claims 2 and 9, wherein said larva-picker device (10) further comprises a connecting element (3) adapted to fluidically connect said tube (2) to said needle-holder body (42), wherein
said connecting element (3) has a hollow cylindrical linear body extending along a central axis (y), symmetric with respect to a transverse plane (y'), coupled at a first opening (331) to said tube (2) and at a second opening (331) to said needle-holder body (42).

11. A kit for assembling a larva-picker device (10) according to any of the preceding claims when dependent on claims 2, 4, 9 and 10, comprising:
- a shaped needle (41);
- a needle-holder body (42) adapted to couple with said shaped needle (41);
- a connecting element (3) adapted to be coupled to said needle-holder body (42);
- a tube (2) adapted to be coupled to said connecting element (3);
- a mouthpiece (1) adapted to be coupled to said tube (2).

12. A method for the larval grafting of a honey bee larva from a cell using a larva-picker device (10) according to any of claims 1 - 10, said method being **characterised in that** it comprises the following steps:
a) inserting said end portion (41') of said shaped needle (41) into a cell until said end portion (41') comes into contact with said larva;
b) creating a negative pressure within said channel of said shaped needle (4) by suction through a suction portion (11) of said larva-picker device (10), so that said larva adheres to said end portion (41');
c) lifting said larva from the bottom of the cell by means of said larva-picker device (10);
d) maintaining said negative pressure within said larva-picker device (10) by occluding said suction portion (11);
e) interrupting step d) to detach said larva from said end portion (41').

13. The method for the larval grafting according to the preceding claim, wherein the following steps are provided between step d) and step e):
f) transferring said larva into a cell cup (100) by positioning said end portion (41') within said cell cup (100);
g) bringing said larva into contact with a bottom wall of said cell cup (100).
